# FASCICULE DE BREVET EUROPEEN

(11) **EP 2 196 879 B1**
(45) Date de publication et mention de la délivrance du brevet: **26.08.2020**
(21) Numéro de dépôt: 09178601.2
(22) Date de dépôt: 10.12.2009
(51) Int. Cl.: G05B 19/042

(54) **Procédé de fonctionnement d'un système domotique**
Verfahren zum Betrieb eines Systems für Haushalte
Operation method for a home automation system

(30) Priorité: 10.12.2008 FR 0806940
(43) Date de publication de la demande: 16.06.2010
(73) Titulaire: SOMFY ACTIVITES SA, 74300 Cluses (FR)
(72) Inventeur: Duchene, Isabelle, 74970, MARIGNIER (FR); Marais, Luc, 56100 Lorient (FR); Loiseau, Jean-Noël, 74800, LA ROCHE-SUR-FORON (FR)
(74) Mandataire: Novaimo

(56) Documents cités:
- DE-U1- 29 700 449
- US-A1- 2006 052 884
- US-B1- 6 791 467

## Description

L'invention concerne un dispositif de commande des équipements domotiques dans un bâtiment.

Les équipements domotiques communiquent avec le dispositif de commande par une liaison sans fil par exemple assurée par radiofréquences. Ces équipements comprennent des actionneurs d'éclairage, de chauffage-climatisation, de ventilation naturelle ou forcée, d'alarme anti-intrusion, ou encore des actionneurs de fermeture ou de protection solaire, de manœuvre de panneaux mobiles ou d'écrans de projection, ainsi que les produits associés pilotés.

De nombreux problèmes résultent de la commande de ces équipements, parfois au moins en partie inaccessibles et/ou non visibles depuis un dispositif de commande accessible à l'utilisateur.

En particulier, le nombre des équipements impose souvent des regroupements par typologie d'équipement (actionneurs de store, actionneurs d'éclairage, actionneurs de verrouillage, pour effectuer des commandes simultanées, ou transmettre des informations à un seul type d'équipement. Mais d'autres regroupements sont nécessaires en fonction de la localisation, par exemple : tous les volets roulants du rez-de-chaussée, tous les stores de la façade sud, tous les équipements (quel que soit leur type) du séjour...

La représentation des équipements, de leur localisation, des ordres de commande, pose des difficultés d'ergonomie ou de compréhension, aussi bien en mode utilisation qu'en mode d'installation, et de nombreuses inventions ont décrit ces problèmes et tenté de les résoudre, notamment à l'aide d'écrans d'affichage avec action tactile et d'icônes simplifiées.

Ainsi le brevet US 5,410,326 décrit une télécommande universelle dans laquelle un même écran sert à l'affichage d'icônes représentatives d'actions diverses et à l'affichage de messages.

Le brevet US 6,791,467 décrit également une télécommande universelle de type adaptatif capable de reconnaître à distance les différents équipements de la maison et d'afficher sur un écran, par exemple un écran tactile, des icônes représentatives de ces équipements et de leur état (par exemple : « connu mais hors de portée »). Cette fonctionnalité de télécommande universelle est préférentiellement implantée dans un produit existant de type assistant digital personnel (PDA). Le fait de presser l'écran tactile au-dessus d'une icône permet d'activer un fichier de configuration, résident dans la télécommande universelle et/ou téléchargé à partir de l'équipement et d'afficher sur l'écran une représentation du panneau de commande de l'équipement. Il devient alors similaire pour l'utilisateur de donner un ordre en pressant l'image d'un bouton du panneau de commande ou d'appuyer directement sur le bouton réel de l'équipement. Il est aussi possible d'interroger l'état de l'équipement à partir de la télécommande universelle, ou qu'un signal d'avertissement soit envoyé à la télécommande quand survient un événement particulier dans l'équipement.

Les brevets US 6,563,430 et US 6,957,075 décrivent également un appareil personnel muni de moyens d'affichage d'icônes et de géolocalisation, l'affichage et les fonctionnalités de l'appareil dépendant de sa localisation. Dans le premier cas, la localisation est très fine et le plan des différentes pièces de la maison est affichable sur l'écran. Dans le brevet US 6,885,362 de même le plan d'une pièce avec la localisation des différents équipements dans une pièce de la maison est accessible sur l'écran, avec également la possibilité de faire apparaître la hiérarchie des pièces et étages (ou groupement de pièces) dans le bâtiment. Dans tous les cas, l'activation d'un des équipements est possible par action directe sur sa représentation dans l'écran tactile. Il s'agit de représentations et de moyens encore trop complexes.

Il est également connu de très nombreux moyens ou procédés pour naviguer dans des menus déroulants ou dans une représentation iconique afin de sélectionner une action ou un équipement. Ces moyens sont décrits dans les documents ci-dessus ou encore dans le brevet US 7,154,478 qui prévoit un déplacement d'ensemble, sur un écran, d'une image globale constituée d'une pluralité d'images partielles (équivalentes à des icônes) en fonction des mouvements subis par l'écran. Tout se passe comme si l'écran était une fenêtre transparente déplaçable sur cette pluralité d'images partielles de manière à être centré sur l'une d'elles. Les images partielles représentent des équipements domotiques de type téléviseur, magnétoscope, éclairage etc, qui peuvent être groupés, sous forme de listes dans des menus, selon leur localisation ou selon leur fonction ou selon la fréquence d'usage. Un écran de réglage permet d'affecter librement un nom aux équipements.

Dans le domaine industriel, il est connu de la demande de brevet US 2006/0069459 de visualiser une installation avec des icônes de type « parent » et des icônes de type « enfant », des graphiques modifiables dynamiquement selon l'état de l'installation.

Pour des applications multimédia, il est également connu de la demande de brevet US 2008/0141172 d'utiliser des icônes sous forme d'une image animée.

Le brevet US 7,379,778 décrit une configuration typique d'installation comprenant de nombreux équipements d'une maison, principalement de type multimédia mais aussi de chauffage ou d'éclairage, et de nombreux moyens et procédés de commande selon différents protocoles et en utilisant des commandes génériques. Un ou plusieurs dispositifs de commande centralisé sont utilisés, ces dispositifs pouvant être des serveurs, boîtiers de commande dits « Pods » ou autres, caractérisés par l'usage de facilités d'installation permises par le standard « Universal Plug and Play » (UPnP). Comme décrit, l'installation utilise les ressources d'ordinateurs personnels ou d'Internet en tant que serveurs locaux ou distants. La gestion de scénarios ou « snapshots » est également décrite dans ce document.

La demande de brevet WO 2006/092695 décrit une interface de commande d'une installation domotique, au moyen notamment d'un écran sectorisé en cases, de manière matricielle. Une case peut être affectée par l'utilisateur ou par l'installateur à un seul équipement, à un groupe d'équipements ou encore à une commande particulière ou enfin à un scénario. Un symbole graphique simple (carré, cercle, disque, triangle) peut être affiché dans chaque case pour décrire son affectation à un type particulier d'équipement ou d'ordre ou pour décrire par exemple l'état de l'équipement : un carré blanc pour des volets ouverts ou des lampes allumées, un carré noir pour des volets roulants fermés ou des lampes éteintes. Alternativement, on peut utiliser différentes couleurs pour indiquer des états ou éventuellement accentuer la mémorisation en utilisant des codes de couleurs pour différents types de commandes (équipement seul, groupe, scénario) ou différents espaces de la maison (salon, chambre, jardin). Un curseur est déplaçable sur l'écran au moyen d'un moyen de navigation, permettant la sélection d'une case et l'affichage dans une zone auxiliaire de l'écran d'un nom donné à la case.

Il est également connu du brevet WO 03/007265 et de son brevet EP 1 527 377 de faciliter une phase d'installation nécessitant la mise en correspondance d'un équipement physique avec son identifiant utilisé dans le protocole de communication. Ces procédures restent complexes.

Les documents EP 671 676 et US 5 189 412 décrivent une méthode de fonctionnement d'un système domotique pour la définition d'un scénario.

Malgré les progrès apportés par les dispositifs de l'art antérieur, il reste peu aisé pour un utilisateur même familiarisé avec les techniques informatiques d'aborder de manière simple, intuitive et surtout : progressive, le monde extrêmement riche en possibilités de l'automatisation des équipements de la maison.

L'utilisateur des dispositifs de l'art antérieur a la possibilité de nommer les équipements comme il l'entend, mais il lui manque de pouvoir les affecter de manière simple et compréhensible, sans le moindre effort d'abstraction ou de hiérarchisation, à des pièces ou des sous-ensembles de la maison parfaitement identifiables au premier coup d'œil, et ceci seulement quand le besoin s'en fait sentir.

Le but de l'invention est de fournir un procédé de fonctionnement et un dispositif de commande remédiant aux inconvénients évoqués ci-dessus et améliorant les procédés et dispositifs connus de l'art antérieur. En particulier, l'invention permet de faciliter et rendre plus intuitive l'utilisation d'un dispositif de commande de plusieurs éléments domotiques.

Le procédé de fonctionnement selon l'invention est défini par la revendication 1.

Différents modes d'exécution du procédé de fonctionnement selon invention sont définis par les revendications 2 à 5.

Le système domtique selon l'invention est défini par la revendication 6.

Des modes de réalisation particuliers sont définis par les revendications 7 et 8.

L'invention sera mieux comprise à la lecture de la description qui va suivre, donnée uniquement à titre d'exemple et faite en se référant aux dessins annexés sur lesquels :
La figure 1 représente une installation selon l'invention.
La figure 2 représente une partie d'écran de commande.
La figure 3 représente une icône de type d'équipement, dite aussi icône de type.
La figure 4 représente une icône d'équipement, pour un premier équipement.
La figure 5 représente une icône d'équipement, pour un deuxième équipement.
La figure 6 représente une fenêtre de commande.
La figure 7 représente un procédé de découverte et une variante de ce procédé.
La figure 8 représente un procédé de réglage de scénario.
La figure 9 représente un procédé de scrutation permettant la mise à jour et/ou la sélection d'icônes d'équipement.

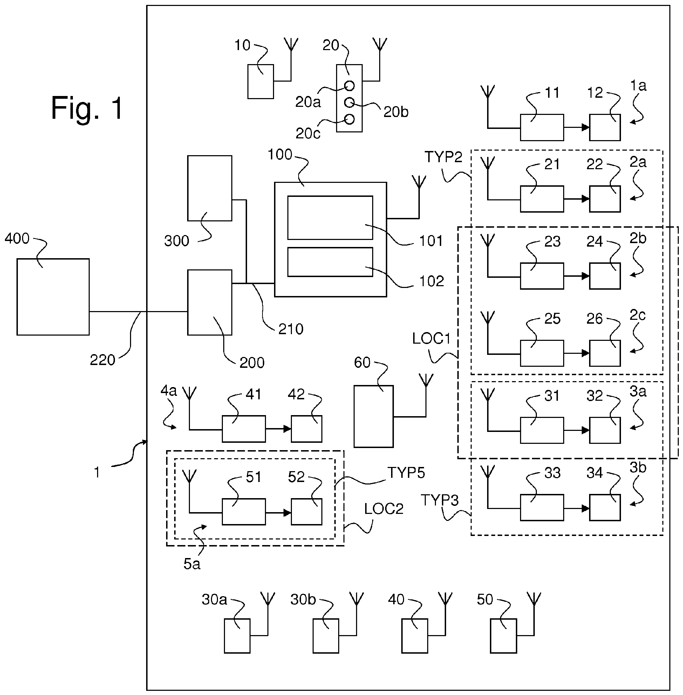

La figure 1 représente une installation domotique 1 comprenant plusieurs équipements de cinq types différents.

Les équipements comprennent des actionneurs et des produits domotiques sur lesquels les actionneurs agissent pour les déplacer ou pour les activer. Les actionneurs comprennent des moyens de réception d'ordres par voie hertzienne, représentés par une antenne. Alternativement, les ordres peuvent être transmis par d'autres moyens de communication, tels que courants porteurs ou liaisons de type infrarouge.

Le premier équipement 1a, d'un premier type TYP1 est par exemple un actionneur de store 11 entraînant un store de terrasse 12. Il peut-être commandé par un premier moyen spécifique de commande 10.

Les deuxièmes équipements 2a, 2b, 2c, d'un deuxième type TYP2 sont par exemple des actionneurs pour volets roulants 21, 23 et 25 entraînant respectivement les volets 22, 24 et 26. Ils peuvent être commandés respectivement par des touches 20a, 20b et 20c d'un deuxième moyen spécifique de commande 20.

Les troisièmes équipements 3a et 3b, d'un troisième type TYP3 sont par exemple des actionneurs pour stores vénitiens entraînant respectivement les stores vénitiens 32 et 34. Ils peuvent être commandés respectivement par des troisièmes moyens spécifiques de commande 30a et 30b.

Le quatrième équipement 4a, d'un quatrième type TYP4 est par exemple une centrale d'alarme anti-intrusion 41 raccordée à une sirène 42. Elle peut être commandée par un quatrième moyen spécifique de commande 40.

Le cinquième équipement 5a, d'un cinquième type TYP5 est par exemple un actionneur de portail 51, raccordé à un portail 52. Il peut être commandé par un cinquième moyen spécifique de commande 50.

D'autres types d'équipements sont présents dans une telle installation mais non représentés à titre d'exemples : actionneurs de portail, de verrouillage, de ventilation naturelle, d'éclairage, de chauffage-climatisation etc. On a représenté dans un trait pointillé court référencé TYP2 tous les équipements de deuxième type, TYP3 pour tous les équipements de troisième type et TYP5 pour l'équipement de cinquième type. Pour simplifier la figure, cette représentation n'a pas été appliquée à l'équipement de type 1 et de type 4.

L'installation 1 comprend également un dispositif de commande nomade 60 tel qu'un assistant digital personnel (PDA) et un dispositif de commande fixe 100 tel qu'un panneau mural. Tous les équipements, le dispositif de commande nomade, le dispositif de commande fixe, communiquent entre eux par utilisation d'un même protocole radiofréquences, par exemple le protocole io-homecontrol (marque déposée). Un symbole d'antenne représente ce moyen de communication commun. Alternativement, plusieurs protocoles peuvent être utilisés, avec passerelles de communication ou avec dispositifs supportant plusieurs protocoles.

Le dispositif de commande fixe est connecté à un boîtier de communication 200 par une première liaison haut-débit 210. Cette première liaison haut-débit est de type filaire, par exemple de type Ethernet, ou de type radiofréquences, par exemple Wi-Fi. Le boîtier de communication est raccordé au monde extérieur à l'installation 1, et en particulier à un serveur internet 400, par une deuxième liaison haut-débit 220.

Un ordinateur personnel 300 ou un téléviseur peut être connecté à la première ou seconde liaison haut-débit.

Le dispositif de commande fixe comprend un écran de commande 101, préférentiellement de type tactile, et un ensemble électronique 99 permettant d'assurer la gestion de l'écran, comprenant d'autres moyens d'interface homme-machine tels que clavier de commande, buzzer, haut-parleur, voyants, et des moyens de traitement pour la commande des équipements et de communication radio, comme décrits dans l'art antérieur.

L'installation ainsi décrite jusqu'à présent est similaire aux installations de l'art antérieur. Elle est susceptible de comprendre des variantes décrites dans l'art antérieur. Par exemple l'écran 101 peut être physiquement séparé d'un boîtier de commande (alors appelé « Pod ») qui comprendrait tout ou partie de l'ensemble électronique 99. L'écran de commande peut être remplacé par celui de l'ordinateur personnel 300, ou encore par celui de l'assistant personnel 60. Les ressources informatiques permettant le fonctionnement du boîtier de commande sont préférentiellement implantées dans ce dernier, mais il est également possible d'en distribuer tout ou partie dans l'ordinateur personnel ou dans l'assistant personnel ou encore dans le serveur internet 400, notamment quand il s'agit de bases de données relatives à la configuration de l'installation.

On a représenté sur la figure 1 des groupements d'équipements correspondant à leur localisation (localisation réelle ou telle qu'imaginée ou telle que voulue par l'utilisateur) à l'intérieur de la maison ou de ses abords.

Un premier ensemble, désigné par LOC1, regroupe les actionneurs de volets roulants 23 et 25 et l'actionneur de store vénitien 31, installés dans une première localisation. Ce regroupement correspond à des produits installés dans le séjour.

Un deuxième ensemble, désigné par LOC2 regroupe le seul actionneur de portail implanté dans une deuxième localisation. Ce regroupement correspond à des produits installés dans le jardin. L'utilisateur aurait pu avantageusement faire figurer le store de terrasse dans cette localisation jardin, mais rien ne l'oblige à le faire.

D'autres regroupements ont été effectués par l'utilisateur, sans être reportés sur la figure pour ne pas la surcharger. Par exemple, l'ensemble LOC3 correspond aux actionneurs du rez-de-chaussée, alors que l'ensemble LOC4 correspond aux actionneurs du premier étage.

Par convention, un ensemble général LOCO regroupe l'ensemble des équipements de la maison, qu'ils aient été ou non affectés à des regroupements plus précis. Alternativement, cet ensemble général LOCO regroupe tous les équipements de la maison non encore affectés à des regroupements plus précis.

Selon l'invention, il existe une icône de localisation ILOC par localisation. Ainsi, une icône générale ILOC0 correspond à l'ensemble général, et représente par exemple une maison. C'est l'icône de localisation par défaut. Une icône ILOC1 correspond au premier ensemble, les équipements du séjour, et est symbolisé à l'aide d'un canapé et tableau pour évoquer une salle de séjour. Une icône ILOC2 correspond au deuxième ensemble, symbolisé à l'aide d'un arbre ou une fleur pour désigner les équipements du jardin. Une icône ILOC3, correspond au troisième ensemble, les équipements du rez-de-chaussée et est symbolisé par une maison en trait fin mais dont le rez-de-chaussée est en trait gras. Une icône ILOC4 correspond au quatrième ensemble, les équipements du premier étage et est symbolisé par une maison en trait fin mais dont le premier étage est en trait gras. Un texte alphanumérique précise la signification de l'icône, par exemple « Séjour » pour la première icône de localisation. Comme il sera vu plus loin, l'utilisateur est libre de choisir, dans une base d'icônes de localisation, celles de son choix, et de lui donner le nom de son choix.

Selon l'invention, il existe une icône générique ou icône de type, par type d'équipement, c'est-à-dire pour représenter un ensemble d'équipements comprenant un même type d'actionneur et/ou un même type de produit associé. Cette icône est prédéfinie. Lors d'une procédure de découverte préalable, chaque équipement a communiqué directement son type au dispositif de commande fixe 100, ou à tout autre dispositif susceptible de transmettre ensuite l'information au dispositif de commande 100. Le type de l'équipement est par exemple contenu dans le nom d'équipement originellement attribué par le constructeur de l'actionneur compris dans l'équipement, par exemple « VR » ou « volet roulant » pour un actionneur de volet roulant, « serrure » pour un actionneur de serrure de porte. L'équipement transmet également son icône de type, ou celle-ci est préférentiellement prédéfinie au sein du dispositif de commande fixe 100, ou encore téléchargée à partir du serveur internet 400.

Une icône de type selon l'invention n'est pas une représentation graphique de l'équipement domotique sous la forme d'un actionneur mais une représentation graphique schématique du produit pouvant être activé par l'actionneur. De préférence, l'icône est une représentation graphique du produit dans un état déterminé. Par exemple, dans le cas d'un produit mobile pouvant être déplacé par l'actionneur, l'icône est une représentation graphique du produit mobile dans une position intermédiaire entre deux positions extrêmes, notamment une position moyenne.

Ainsi, il existe une première icône de type ITYP1 pour représenter les équipements actionneurs pour stores de terrasse. Cette icône représente schématiquement un store de terrasse, à demi-déployé.

Il existe de même une deuxième icône de type ITYP2 pour représenter les équipements actionneurs pour volets roulants. Cette deuxième icône de type représente schématiquement un volet roulant dans une position de demi-ouverture.

Il existe de même une troisième icône de type ITYP3 pour représenter les équipements actionneurs pour stores vénitiens, c'est à dire stores à lamelles horizontales.

Il existe de même une quatrième icône de type ITYP4 pour représenter l'équipement d'alarme. Dans ce cas l'icône de type peut représenter une sirène.

Il existe enfin une cinquième icône de type ITYP5 pour représenter l'équipement domotique de motorisation du portail. Cette cinquième icône de type représente schématiquement par exemple un portail à deux battants entrouverts.

Il existe donc des icônes de type d'équipements et des icônes de localisation. On verra plus loin qu'existe enfin, pour chaque équipement, une icône d'équipement, représentative à la fois de son type et de son état.

Préférentiellement, un installateur dispose de la possibilité de modifier l'affectation automatique d'un équipement à un type d'équipement. Par exemple, un actionneur tubulaire normalement prévu pour manœuvrer un volet roulant peut avoir été installé par ses soins sur un autre produit de type enroulable, par exemple sur un store de fenêtre de type *screen* ou sur une moustiquaire. Un menu spécifique permet à l'installateur de corriger des affectations automatiques erronées ou manquant de précision, en choisissant une icône de type beaucoup mieux adaptée au produit mobile concerné.

Préférentiellement, les icônes de type ont une même couleur pour des produits ayant une fonction principale similaire : violet pour tous les produits de fermeture, vert pour les produits de protection solaire, jaune pour tous les produits d'éclairage, rouge pour tous les produits d'alarme etc.

Inversement, toutes les icônes de localisation ont une seule couleur, par exemple bleu ciel.

On trouvera donc plusieurs icônes de type de couleur violette, car il existe plusieurs types de produits de fermeture (type volets battants, type volet roulant, type portail, type porte de garage, type serrure etc.), plusieurs icônes de type de couleur jaune car il existe plusieurs types de produits d'éclairage (type spot, type luminaire, type indirect etc.).

De manière préférée, on ajoute aux icônes de type une icône de fonction générique par fonction principale. L'icône de fonction générique ressemble à une icône de type ou de localisation mais sans graphique. Elle est par exemple constituée simplement par un rectangle (ou une autre figure simple) empli de la couleur choisie pour exprimer la fonction. Ainsi, l'icône de fonction générique « fermeture » représente tous les produits de fermeture, quel que soit leur type, sous la forme d'un rectangle empli de violet.

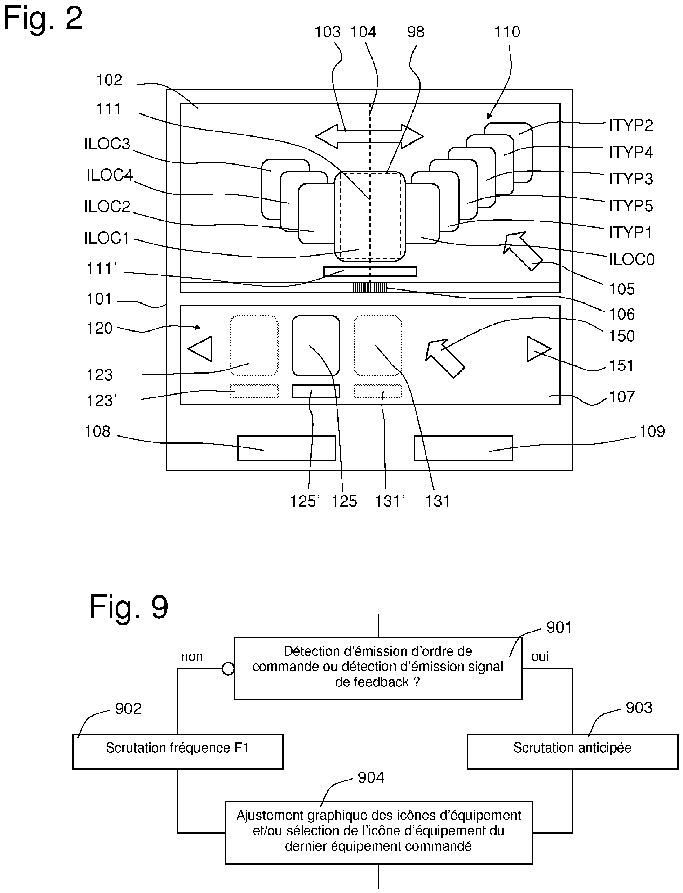

La figure 2 représente, au moins en partie, l'écran de commande 101. Dans une première partie d'écran 102 apparaissent, ou peuvent apparaître, selon un format d'affichage et de navigation 110, toutes les icônes de type ITYP et toutes les icônes de localisation ILOC.

Le format d'affichage et de navigation est préférentiellement un format connu en affichage de dossiers d'images ou en affichage d'icônes multimédia, par exemple le format Cover-Flow de Apple (marques déposées), comme décrit dans les figures 24 et suivantes de la demande de brevet WO 2008/019113.

Ce type de format se prête à l'affichage et à la navigation dans un très grand nombre d'icônes, en réduisant en dimension et/ou en intensité lumineuse les icônes les plus éloignées d'une zone de sélection.

Un moyen de navigation 103 permet de déplacer l'ensemble des icônes sur une courbe ouverte, comme par exemple un segment horizontal ou un arc de cercle, des icônes disparaissant ou apparaissant sur chaque bord de l'écran selon le sens de l'action de l'utilisateur sur le moyen de navigation. Une icône active 111 apparaît par exemple en surbrillance et/ou avec des dimensions supérieures à l'ensemble des autres icônes et/ou au premier plan et/ou au centre horizontal de l'écran faisant office d'index de sélection 104, non nécessairement visible. Par exemple la première icône de localisation ILOC1 est l'icône active 111. Un déplacement de l'ensemble des icônes vers la droite, à l'aide du moyen de navigation 103, amène successivement les icônes ILOC2, ILOC4 et ILOC3 à devenir l'icône active, dans la position occupée par l'icône ILOC1 sur la figure 2. Quand l'icône ILOC3 occupe cette position, l'icône ITYP2 disparaît provisoirement, faute de place.

Alternativement, c'est l'index de sélection 104 qui se déplace sous l'action du moyen de navigation, provoquant la mise en évidence de la nouvelle icône active. On peut également combiner les deux modes de déplacement de manière à sélectionner l'icône active.

Alternativement, le moyen de navigation 103 est constitué par une action directe sur l'écran tactile, une pression du doigt sur l'une des icônes et un déplacement horizontal de celui-ci entraînant le déplacement de l'ensemble des icônes et/ou le déplacement de l'index de sélection. Le moyen de navigation peut également comprendre un accéléromètre lié à un boîtier contenant l'écran, le déplacement des icônes résultant d'un déplacement du boîtier.

Sur la figure 2, on a représenté une zone réduite 98 de l'écran utilisée intégralement pour l'affichage d'une icône. L'icône ou la portion d'icône représentée dans cette zone peut être selon l'état de fonctionnement du dispositif de commande soit une icône de type ou une portion d'icône de type, soit une icône de localisation ou une portion d'icône de localisation. Ainsi, il existe au moins une phase de fonctionnement du dispositif de commande dans laquelle il y a, dans cette zone, une transition d'un affichage d'une portion d'icône de type à un affichage d'une portion d'icône de localisation ou une transition d'un affichage d'une portion d'icône de localisation à un affichage d'une portion d'icône de type. La phase de fonctionnement mentionnée a lieu dans un mode d'usage courant du dispositif de commande ou mode de commande.

La zone réduite 98 peut avoir une position fixe (par exemple centrée sur l'écran) ou peut avoir une position mobile, par exemple liée à l'index de sélection 104.

Le texte associé à l'icône sélectionnée ou active apparaît sous l'icône active dans une zone texte 105. Préférentiellement, seul le texte associé à l'icône active est ainsi affiché, constituant ainsi le nom de l'icône.

Une barre de défilement avec curseur 106 permet de visualiser, la position de l'icône active, la largeur du curseur représentant par exemple le rapport inverse du nombre d'icônes présentement affichées et du nombre total d'icônes de l'installation.

Le curseur 106 peut servir non seulement de moyen d'affichage mais aussi de moyen de navigation, l'ensemble des icônes de type et de localisation se déplaçant vers la droite ou vers la gauche selon le déplacement du curseur.

Un autre moyen de sélection peut être utilisé, par exemple un pointeur comme une première flèche de sélection 105 déplaçable avec une molette ou une souris raccordée à l'écran. Ainsi, une icône peut être sélectionnée par action sur ce pointeur (ou encore par une action directe du doigt) même si elle n'occupe pas l'emplacement de l'icône active. Mais aussitôt après une action de sélection, l'icône sélectionnée est automatiquement déplacée pour occuper un emplacement d'icône active prédéterminé, par exemple au centre de l'écran et/ou l'icône sélectionnée est mise en surbrillance et/ou l'icône sélectionnée est mise au premier plan et/ou les dimensions de l'icône sélectionnée sont modifiées.

Selon l'invention, toutes les icônes de type et toutes les icônes de localisation sont affichables dans la première partie d'écran 102, un même moyen de navigation et/ou de sélection étant utilisé pour activer indifféremment une icône de type ou une icône de localisation.

Les icônes de type sont créées sur l'écran au fur et à mesure que de nouveaux actionneurs appartenant à un nouveau type sont reconnus dans l'installation. Ce processus dit de découverte a lieu de manière automatique, comme décrit dans l'art antérieur, par interrogation des équipements présents et réponse de tous ceux qui sont à portée.

Lors de chaque processus de découverte de nouveaux équipements dans l'installation, l'icône de type associée apparaît automatiquement dans la première partie d'écran 102, à moins que d'autres équipements de même type soient déjà connus du dispositif de commande, auquel cas l'icône de type existe déjà dans la première partie d'écran et le nouvel équipement est automatiquement affecté à cette icône de type.

L'icône de type est recherchée par le dispositif de commande dans une base de données interne ou externe au dispositif de commande, à partir d'une information de type transmise par le nouvel équipement. Alternativement, l'icône de type est transmise par le nouvel équipement lui-même.

Les icônes de type sont regroupées d'un même côté de la première partie d'écran, et apparaissent préférentiellement dans l'ordre d'apparition de chaque nouvelle icône de type, suite à la découverte d'un nouveau type d'équipement. Alternativement, ce classement est modifiable.

Les icônes de localisation sont créées sur l'écran au fur et à mesure de l'affectation d'équipements à une nouvelle localisation. Les icônes de localisation sont choisies par l'installateur ou l'utilisateur dans une base informatique d'icônes de localisation.

L'icône de localisation générale ILOC0, ou icône de localisation par défaut, est la seule à apparaître dans la première fenêtre tant que l'utilisateur n'a pas provoqué des regroupements locaux plus précis et choisi les icônes de localisation associées. Par la suite, les icônes de localisation apparaissent à côté des icônes de localisation déjà créées, dans l'ordre de création, ou alternativement selon un ordre modifiable.

On suppose sur la figure 2 que tous les regroupements de la figure 1 ont été appris par le système de commande, ou effectués par l'installateur, lors d'un procédé d'apprentissage tel que décrit plus loin.

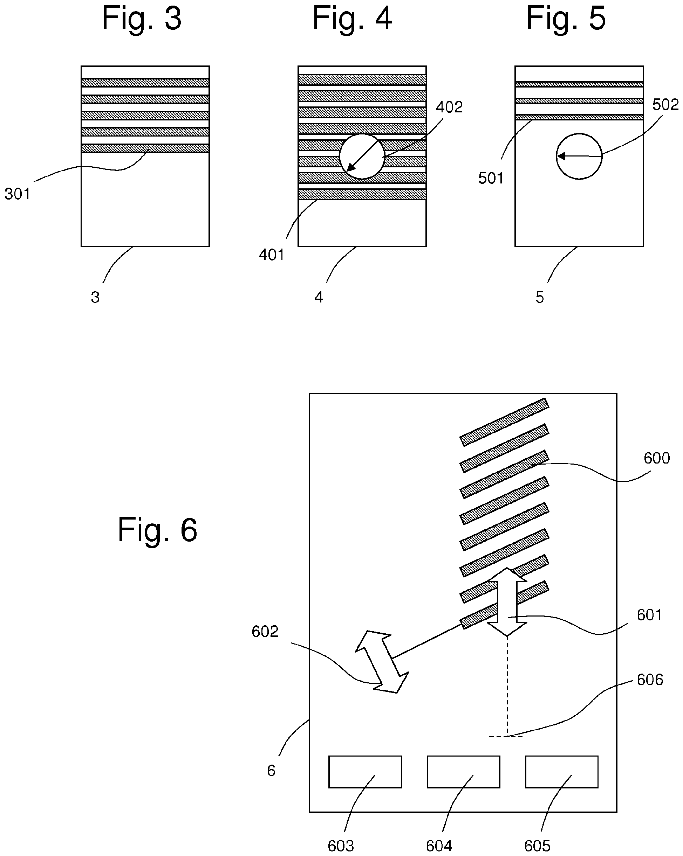

Dans une deuxième partie d'écran 107 apparaissent automatiquement toutes les icônes d'équipements associés à la l'icône de type ou de localisation sélectionnée. Une icône d'équipement, comme détaillé dans les figures 4 et 5, est une représentation à la fois du type d'équipement et de l'état d'un équipement. La première icône de localisation ILOC1 (séjour) étant active, apparaissent sous forme d'icônes d'équipements les équipements affectés à cette icône par l'utilisateur, à savoir deux volets roulants 23 et 25, donc deux icônes d'équipement volet roulant 123 et 125 et un store vénitien 31, donc une icône d'équipement store vénitien 131.

Autrement dit, une icône de type ou de localisation correspond à un répertoire ou dossier informatique regroupant plusieurs icônes d'équipements. La première partie de l'écran correspond à une fenêtre de navigation ou d'exploration. La deuxième partie de l'écran correspond à une fenêtre détaillant le contenu du répertoire correspondant à l'icône de type ou de localisation sélectionnée. A noter qu'une icône d'équipement peut être associée à une icône de type et à une ou plusieurs icônes de localisation. Une icône d'équipement peut être considérée comme un pointeur vers une base de données informatique comprenant les caractéristiques associées à un équipement.

Le texte associé à chaque icône d'équipement, constituant le nom d'équipement, apparaît dans la deuxième partie d'écran 107 au-dessous de chaque icône, respectivement dans les fenêtres texte 123', 125' et 131'.

Sous la deuxième partie d'écran est disposée une zone de commande 108, permettant à l'utilisateur de donner des commandes à l'équipement sélectionné, et une zone d'état 109 permettant l'affichage simplifié d'information sur l'état de l'équipement sélectionné. Par exemple un pictogramme indique dans la zone d'état qu'un ordre est en cours d'exécution par l'équipement.

La zone de commande et/ou la zone d'état peuvent également concerner le fonctionnement d'ensemble du dispositif de commande.

Un deuxième format d'affichage et de navigation 120, éventuellement plus simple que le premier format, est utilisé : par exemple les icônes d'équipement apparaissant sur un même niveau horizontal. Un deuxième moyen de sélection, de type manuel, est constitué par un pointeur comme une flèche mobile de sélection 150. Un deuxième moyen de navigation 151 permet de faire défiler les icônes d'équipement si elles sont trop nombreuses pour toutes figurer dans la deuxième partie d'écran.

Alternativement, un mouvement horizontal du doigt sur la deuxième partie d'écran fait glisser en bloc toutes les icônes si besoin, tandis qu'une simple impulsion sur une icône d'équipement sélectionne l'équipement correspondant.

Sur la figure 2, l'icône d'équipement 123 correspondant au deuxième volet roulant a été sélectionnée par l'utilisateur et apparaît en surbrillance par rapport aux icônes 121 et 135.

Le fait de sélectionner une icône d'équipement permet d'ouvrir une fenêtre d'édition des caractéristiques de l'équipement et/ou permet d'ouvrir une fenêtre de commande relative à cet équipement et/ou permet de sélectionner l'équipement pour participer à un scénario, par exemple en faisant glisser l'icône d'équipement dans une fenêtre de regroupement de scénario.

La figure 3 représente une icône de type 3 selon l'invention, représentant l'ensemble des équipements de type « actionneurs pour stores vénitiens » (stores à lamelles horizontales).

Comme décrit précédemment, une icône de type est une représentation graphique schématique non pas de l'actionneur lui-même mais du produit générique activé par cet actionneur. Dans le cas d'un produit mobile, une icône de type est une représentation graphique schématique du produit mobile activé par cet actionneur, préférentiellement dans une position moyenne 301 d'orientation ou de déploiement.

Les lamelles sont représentées par des bandes dont la couleur se détache sur la couleur de fond.

La figure 4 représente une icône d'équipement 4 selon l'invention, pour un premier équipement 3a comprenant un actionneur pour store vénitien. Il s'agit par exemple de l'actionneur 31 de la figure 1. De nouveau, c'est le produit mobile qui est symbolisé donc le premier store vénitien 32.

Une icône d'équipement ressemble à une icône de type mais avec une différence essentielle, au moins pour les équipements associés à des produits mobiles comme des produits de fermeture ou de protection solaire. En effet, au moins pour ces produits mobiles, chaque icône d'équipement représente approximativement le degré d'orientation ou de déploiement de tels produits.

Contrairement à une icône de type, commune à tous les équipements de même type et donc figée, une icône d'équipement est dynamique et représente donc schématiquement :
- le degré de déploiement du premier store vénitien, par exemple par la position d'une lame inférieure 401 de store relativement à l'icône,
- le degré d'orientation du premier store vénitien, par exemple par l'orientation d'une flèche 402 et/ou par la proportion de l'aire des surfaces des bandes représentant les lamelles rapportée à l'aire des surfaces entre les bandes.

Dans le cas d'un store vénitien, on distingue le degré de déploiement, lié au nombre de lamelles déroulées sur la fenêtre, et le degré d'orientation, ce dernier étant lié à l'inclinaison des lamelles par rapport à l'horizontale et étant représenté en figure 4 par un pictogramme comportant une flèche d'inclinaison variable.

La figure 5 représente une icône d'équipement 5 selon l'invention, pour un deuxième équipement 3b comprenant un actionneur pour store vénitien. Il s'agit par exemple de l'actionneur 33 de la figure 1, représentant le deuxième store vénitien 34 dont le degré de déploiement 501 est plus faible que le premier store vénitien et dont le degré d'orientation 502 est plus élevé (les lamelles étant plus proches de l'horizontale). Alternativement, la figure 5 pourrait représenter le même équipement que dans la figure 4, mais dans une nouvelle position du produit mobile.

Sur les figures 4 et 5 des degrés d'orientation des lames ont été représentés par des orientations de flèches 402 et 502 différentes et par des proportions différentes des aires des surfaces des bandes représentant les lamelles rapportées aux aires des surfaces entre les bandes.

Pour un portail coulissant muni d'un portillon, on pourrait de la même façon représenter le degré de déploiement horizontal du portail et le degré d'orientation du portillon. D'autres représentations sont également possibles sans faire intervenir un pictogramme mais en représentant plus finement le produit mobile et ses degrés de liberté. Par exemple, la plus ou moins forte inclinaison des lamelles peut être schématisée par une épaisseur de lamelle faible quand la lamelle est horizontale et élevée quand elle est proche de la verticale.

Pour d'autres types de produits, par exemple un volet roulant simple, le degré de déploiement suffit, et une icône d'équipement représente alors schématiquement le tablier du volet roulant, plus ou moins déroulé.

Quand l'utilisateur sélectionne une icône d'équipement, alors s'ouvre une fenêtre de commande dudit équipement, comme représenté par la fenêtre de commande 6 de la figure 6. Par exemple, la fenêtre de commande 6 est apparue sur l'écran en sélectionnant l'icône d'équipement 4, par appui du doigt sur cette icône d'équipement.

Préférentiellement, cette fenêtre de commande couvre alors provisoirement une partie de l'écran, sous forme de fenêtre superposée, dite « pop-up », sauf si cet écran est suffisamment grand pour pouvoir affecter de manière permanente une zone de l'écran à l'affichage des fenêtres de commande. Alternativement, la fenêtre de commande remplace simplement la première partie et/ou la deuxième partie de l'écran.

La fenêtre de commande représente schématiquement le produit mobile, éventuellement sous une deuxième représentation graphique différente de la première représentation graphique utilisée dans l'icône d'équipement.

Une représentation de store vénitien 600 apparaît cette fois en coupe avec un bouton de réglage du degré de déploiement 601 et un bouton de réglage du degré d'orientation 602. Chaque bouton de réglage a par exemple la forme d'une flèche ou d'une double-flèche. Ces boutons de réglage constituent des moyens de transformation ou de modification de l'apparence de la représentation du produit mobile.

Si l'utilisateur place son doigt sur le bouton de réglage 601 et fait glisser son doigt vers le bas, alors l'image 600 se modifie de manière à faire apparaître un déploiement plus grand (apparition de nouvelles lamelles) et inversement dans le cas d'un déplacement du doigt vers le haut. Si l'utilisateur place son doigt sur le bouton de réglage 602 et le fait glisser vers le haut ou vers le bas, cela a pour effet de modifier dans l'image 600 l'inclinaison des lamelles vers l'horizontale ou vers la verticale.

Préférentiellement, les butées de réglage 606 en déploiement ou en orientation sont indiquées, de même qu'une graduation, et un affichage numérique en pourcentage ou en autre valeur du degré d'orientation et du degré de déploiement, par exemple : « angle = 45° » et « déploiement = 80 %).

Quand l'utilisateur a modifié à sa convenance le degré d'orientation et/ou le degré de déploiement, il agit sur un premier bouton de commande 603, qui provoque l'émission d'un ordre de commande uniquement vers l'équipement sélectionné, ou sur un deuxième bouton de commande 604 qui provoque l'émission d'un ordre de commande vers tous les équipements de même type et de même localisation que l'équipement sélectionné, ou sur un troisième bouton de commande 605 qui provoque l'émission d'un ordre de commande vers tous les équipements de même type que l'équipement sélectionné, quelle que soit leur localisation. Dans tous les cas, l'ordre de commande est tel qu'il contient les instructions nécessaires à ce que l'équipement prenne le degré de déploiement et/ou d'orientation affiché par la fenêtre de commande.

Préférentiellement, la fenêtre de commande se ferme automatiquement lors de l'action sur un bouton de commande ou lors de l'exécution de l'ordre de commande.

L'icône d'équipement est automatiquement remise à jour par ajustement graphique quand l'ordre de commande est exécuté. Si l'ordre s'applique à plusieurs équipements, la mise à jour concerne toutes les icônes d'équipement de ces équipements.

Un témoin, par exemple un témoin dynamique animé par clignotement, ou par rotation, indique qu'un ordre est en cours de transmission et/ou en cours d'exécution et/ou que la deuxième représentation de l'équipement ou que l'icône n'est pas encore à jour, c'est-à-dire représentative de l'état actuel de l'équipement.

Grâce au procédé de fonctionnement selon l'invention, et en particulier grâce au mode d'exécution du procédé qui vient d'être décrit, une icône représentant un équipement domotique est représentative de son état et notamment d'un état intermédiaire entre deux états extrêmes. Il est en effet important qu'une icône d'équipement soit représentative de l'équipement lui-même et non d'un panneau de commande dudit équipement. Ceci est particulièrement vrai quand l'équipement est un produit motorisé de fermeture ou de protection solaire dans un bâtiment : un actionneur de porte de garage ou de portail, de store de terrasse, de store de type vénitien, de volet roulant. Dans ce cas, c'est le produit final qui doit être représenté sur l'icône d'équipement et l'action sur l'icône d'équipement doit en provoquer une modification analogue à celle du produit final, servant de consigne et à l'émission d'un ordre vers l'équipement. Ainsi, il est possible au premier coup d'œil d'avoir une vision, au moins approximative, de l'état d'orientation et/ou de déploiement total ou partiel de plusieurs produits motorisés de fermeture ou de protection solaire, ceci en sélectionnant simplement une icône de type ou une icône de localisation.

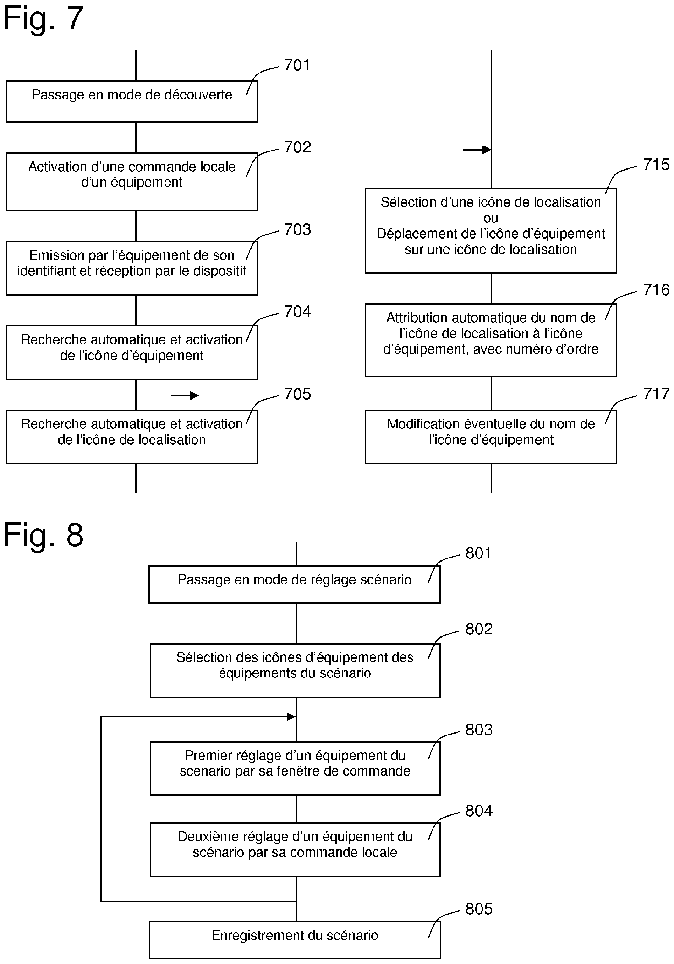

La figure 7 représente un mode d'exécution d'un procédé d'apprentissage d'un dispositif de commande selon l'invention présentant un mode de découverte.

Dans une première étape 701, on passe dans un mode de découverte, par action de l'utilisateur sur le dispositif de commande, par exemple un appui spécifique sur la zone de commande 108. Dans le mode découverte, le dispositif de commande diffuse un signal spécifique de découverte à tous les équipements. Les équipements passent alors en mode de découverte et le dispositif de commande est en attente de réception d'information.

Dans une deuxième étape 702, l'installateur agit sur un moyen de commande spécifique à un équipement, par exemple le moyen de commande spécifique 20c de l'actionneur 25 contenu dans l'équipement 2c. Cette deuxième étape peut comprendre l'affichage préalable d'un message demandant à l'installateur d'agir sur un équipement de son choix.

Suite à cette action, l'équipement réagit par un signal sensitif destiné à l'installateur, par exemple un bref mouvement d'aller-retour, et surtout envoie dans une troisième étape 703 un message vers le dispositif de commande pour l'informer qu'il vient d'être activé. Ce message contient un identifiant de l'équipement.

A la réception de cet identifiant, le dispositif de commande recherche automatiquement et sélectionne l'icône d'équipement correspondante, donc l'icône d'équipement 125 et le nom d'équipement 125' correspondant à l'actionneur 25.

S'il s'agit d'une première mise en relation, l'icône d'équipement peut être remplacée par l'icône de type, car l'équipement n'est pas nécessairement en mesure de transmettre des informations sur le degré d'orientation et/ou le degré de déploiement.

Lors d'une première mise en relation, la fenêtre texte 125' associée à l'icône d'équipement 125 contient un texte originel, par exemple « Volet Roulant # 286945 ». Ce texte, par exemple fixé par le constructeur de l'actionneur, est immédiatement modifiable par l'installateur (ou l'utilisateur) qui sait sans ambiguïté quel est le produit qu'il vient d'activer à l'aide du moyen de commande. La fenêtre texte est donc mise à jour, par exemple « VR Séjour Ouest », à l'aide de commande spécifique de la zone de commande 108, permettant par exemple l'ouverture d'une fenêtre de saisie sous forme de clavier alphanumérique.

Ainsi, l'équipement devient parfaitement identifié.

S'il s'agit d'une première mise en relation, l'équipement est affecté à uniquement l'icône de localisation générale ILOC0, qui devient automatiquement sélectionnée. Par contre, si la même opération est effectuée alors qu'une affectation de l'équipement à une icône de localisation a déjà été effectuée, alors c'est cette icône de localisation qui est automatiquement sélectionnée, par exemple l'icône « Séjour » ILOC1 dans le cas de l'équipement 25.

A partir d'une configuration initiale quelconque, et suite au passage en mode découverte et à l'activation du moyen de commande 26, l'écran se présente alors dans la configuration de la figure 2 avec sélection automatique de l'icône d'équipement 125 et de l'icône de localisation ILOC1.

Si l'équipement est affecté à plusieurs icônes de localisation, un indicateur en informe l'utilisateur dans la zone d'état 109. Il suffit d'activer la zone de commande 108 pour passer d'une première icône de localisation comprenant l'équipement à une deuxième icône de localisation comprenant l'équipement, pour visualiser ou éventuellement modifier les affectations.

Le lien entre icône d'équipement et équipement réel est donc très facile à établir en utilisant ce procédé. Ce procédé remplace ou complète de manière efficace les méthodes connues de l'art antérieur.

Grâce au procédé selon l'invention, et en particulier grâce au mode d'exécution du procédé qui vient d'être décrit, une action directe sur l'équipement (ou sur un moyen de commande spécifique, associé à celui-ci) permet son repérage immédiat sur un écran d'affichage, au moins en tant que type d'équipement et éventuellement en tant que localisation, l'un comme l'autre étant d'ailleurs modifiables s'il y a lieu.

La figure 7 représente, dans sa partie droite, une variante du procédé, se substituant à la cinquième étape 705.

Cette variante a trait à l'affectation d'une localisation à l'équipement dont l'icône d'équipement vient d'être activée lors de la quatrième étape 704.

Dans une première étape de variante 715, l'installateur sélectionne une icône de localisation parmi l'ensemble des icônes de localisation, alors que l'icône d'équipement est active, ou alternativement l'installateur fait glisser l'icône d'équipement vers une icône de localisation jusqu'à rejoindre celle-ci.

Dans une deuxième étape de variante 716, l'une ou l'autre des opérations précédentes a pour effet d'affecter l'équipement au groupement représenté par l'icône de localisation.

Un nouveau nom de l'icône d'équipement est alors automatiquement généré, selon un format de nom d'équipement, en intégrant tout ou partie du nom de l'icône de localisation, et un numéro d'ordre.

Par exemple, lors de l'étape 704, l'équipement sélectionné est représenté par une icône portant le nom « Volet Roulant # 286945 ».

Lors de la première étape de variante 715, l'installateur ou l'utilisateur fait glisser l'icône d'équipement sur l'icône de localisation « Séjour » ILOC1. Aussitôt, le nom de l'icône d'équipement devient « Volet Roulant Séjour 2 », le nom de l'icône de localisation et un numéro d'ordre venant se substituer à la référence fabricant ou au code propre originel de l'icône d'équipement. Si l'équipement est le seul équipement du même type dans le groupement, alors le numéro d'ordre n'apparaît pas dans le nom. Ce numéro devient automatiquement 1 dès qu'il apparaît un deuxième équipement de même type qui prend alors le numéro 2, et ainsi de suite. Si le volet a été rebaptisé préalablement par l'utilisateur, « VR Ouest » par exemple, cette étape permet de modifier automatiquement ce nom par l'adjonction du nom de l'icône de localisation. Le nom de l'icône d'équipement devient « VR Ouest Séjour ».

Dans une troisième étape de variante 717, l'utilisateur ou l'installateur peut modifier le nom attribué automatiquement lors de l'étape précédente.

Un équipement dont le nom a été modifié dans un groupement voit automatiquement ce nom modifié dans les groupements de niveau supérieur. Par exemple, l'équipement précédent s'appelle également « Volet Roulant Séjour 2 » lorsqu'on le visualise à partir de l'icône de localisation par défaut ILOC0 ou lorsqu'on le visualise à partir de l'icône de type ITYP2 « Volets Roulants ».

Cette variante peut également s'appliquer même quand la sélection de l'icône d'équipement est effectuée sans recourir aux étapes 701 à 704 du procédé, par exemple quand l'icône d'équipement est sélectionnée à l'aide du deuxième moyen de sélection 150 ou quand on utilise un autre procédé de découverte.

La figure 8 représente un mode d'exécution d'un procédé de fonctionnement d'un système domotique selon l'invention présentant un mode de réglage ou de configuration d'un scénario.

Dans une première étape 801, on passe en mode de réglage de scénario, par exemple suite à une manipulation spécifique de la zone de commande 108. Il s'ouvre alors une fenêtre de regroupement des équipements du scénario. Comme dans les cas précédents, cette fenêtre apparaît en superposition, ou dans une partie d'écran spécialement affectée à cet usage.

Dans une deuxième étape 802, l'utilisateur sélectionne les équipements participant au scénario : chaque fois qu'un équipement est sélectionné, son icône d'équipement est dupliquée dans la fenêtre de regroupement.

Dans une troisième étape 803, l'utilisateur ouvre la fenêtre de commande d'un équipement du scénario et procède au réglage des degrés d'orientation et/ou de déploiement à l'aide des boutons de commande, comme expliqué plus haut. Le réglage est le réglage souhaité lors d'une exécution ultérieure du scénario. Il peut cependant être directement appliqué à l'équipement, par exemple par action sur le premier bouton de commande 603.

Complémentairement ou alternativement, dans une troisième étape 804, l'utilisateur utilise le moyen de commande spécifique de l'équipement pour ajuster de manière fine son réglage.

Les troisième et/ou quatrième étapes sont répétées pour les différents équipements du scénario, puis, dans une cinquième étape 805, le scénario est enregistré, c'est-à-dire que tous les paramètres de réglage sont mémorisés pour être transmis comme consignes lors d'une exécution ultérieure du scénario.

Ainsi, le dispositif de commande permet de combiner, systématiquement ou chaque fois que nécessaire, à la fois un réglage virtuel de l'équipement (par modification de l'apparence d'une icône ou d'une représentation de l'équipement) et un réglage réel de celui-ci. L'utilisateur n'a pas à choisir entre un mode de réglage de scénario où tous les équipements sont ajustés virtuellement ou un mode de réglage où tous les équipements sont ajustés réellement. Après ces ajustements, une étape d'enregistrement de l'état des équipements a lieu. Cette étape est comme une « photographie » de l'état des équipements (« snapshot »).

Même dans le cas où le réglage virtuel à l'aide de l'écran tactile conduit à l'émission d'un ordre, exécuté par l'équipement, pendant la phase de réglage, il est clair que la commande locale de l'équipement permet d'ajuster plus finement le réglage.

Pour parfaitement maîtriser les étapes de réglage d'un scénario, on peut imposer à l'utilisateur d'agir sur un élément de la zone de commande 108, par exemple un bouton de réglage fin, pour placer le système de commande dans un état d'attente d'une nouvelle information sur l'état réel de l'équipement sélectionné dans la fenêtre de scénario.

Cependant, un procédé de scrutation, objet de l'invention et dont un mode de réalisation est décrit en figure 9 permet de s'affranchir de cette contrainte.

Ce procédé de scrutation se combine avantageusement au procédé de fonctionnement et/ou au procédé d'apprentissage de l'invention pour garantir qu'une icône d'équipement soit sélectionnée rapidement ou soit au mieux représentative de l'état réel d'un équipement.

Dans une première étape 901, le dispositif de commande 100 est placé en écoute permanente du trafic de communication sur le réseau domotique et il détecte ou non la présence de trafic de communication sur le réseau domotique. Il s'agit par exemple d'une étape de détection d'émission d'ordre de commande ou d'information d'exécution d'ordre de commande.

En absence de signal, on passe à une deuxième étape 902, dans laquelle la scrutation est effectuée avec une première fréquence F1.

On entend par là que, à intervalles réguliers (F1 fois par unité de temps), le dispositif de commande interroge individuellement chaque actionneur pour connaître son état actuel. Ayant connaissance de l'état actuel, le dispositif de commande remet à jour les représentations graphiques des équipements, notamment les icônes d'équipements. L'interrogation a lieu sous forme d'une succession de requêtes individuelles ou sous forme d'une requête collective. Dans cette étape 902, il y a donc requête adressée aux actionneurs pour que les actionneurs répondent par une information sur leur état.

En présence de signal, on passe à une troisième étape 903, dans laquelle la scrutation est effectuée de manière anticipée, par exemple immédiatement. Ainsi, la remise à jour est-elle quasi-immédiate, mais seulement quand il y a lieu de le faire. La scrutation anticipée peut être générale, c'est-à-dire concerner tous les équipements du réseau ou être sélective, c'est-à-dire ne concerner que les équipements concernés par le trafic de communication sur le réseau. Dans cette étape 903, il y a requête adressée aux actionneurs pour que les actionneurs répondent par une information sur leur état.

Dans une quatrième étape 904, il y a, selon les cas, remise à jour de toutes les représentations graphiques d'équipements par modification de leurs apparences en fonction des nouveaux états ou remise à jour de certaines représentations graphiques d'équipements par modification de leurs apparences en fonction des nouveaux états. Complémentairement ou alternativement, il y a sélection d'une ou plusieurs icônes d'équipements particulières correspondant à un ou plusieurs équipements dont la position vient d'être modifiée.

Le signal servant à orienter le procédé vers la deuxième étape 902 ou la troisième étape 903 est préférentiellement discriminé de manière à ce que l'étape 903 ne soit pas déclenchée par n'importe quel trafic de communication.

Dans une première variante, la troisième étape 903 est mise en œuvre si le trafic comprend un signal reconnu comme étant un ordre de commande, émis par un moyen de commande.

Dans une deuxième variante, la troisième étape 903 est mise en œuvre si le trafic comprend un signal reconnu comme étant un acquiescement (feedback) émis par un actionneur lorsqu'un ordre a été exécuté.

Dans une troisième variante, la troisième étape 903 est mise en œuvre si le trafic comprend l'un ou l'autre des signaux précédents mais adressé à un actionneur spécifique, celui actuellement sélectionné sur l'écran de commande.

Préférentiellement, l'utilisateur est informé de la pertinence de l'état actuel des icônes d'équipement. Par exemple si une mise à jour remonte à un délai supérieur à un seuil de durée déterminé, ajustable selon les équipements, alors l'icône d'équipement apparaît en grisé pour indiquer qu'il y a un doute. De même, il peut être procédé à l'affichage d'information sur l'horaire de la dernière mise à jour.

De manière générale, le procédé permet à un dispositif de commande 100 utilisant éventuellement le procédé de fonctionnement selon l'invention ou le procédé d'apprentissage selon l'invention et communiquant sur un réseau domotique avec des actionneurs 11, 21, 23, 25, 31, 33, 41, 51 de scruter l'état d'une installation domotique. Il comprend une étape de requête 902, 903 adressée aux actionneurs pour que les actionneurs répondent par une information sur leur état, une étape 901 de détection de trafic de communication sur le réseau domotique, l'étape de requête est anticipée 903 quand le résultat de l'étape 901 de détection est positif.

## Revendications

1. Procédé de fonctionnement d'un système domotique comprenant :
- au moins un équipement domotique (1a, 2a, 2b, 2c, 3a, 3b, 4a, 5a) d'un bâtiment, l'équipement domotique étant associé à un moyen de commande spécifique d'équipement (10, 20a, 20b, 20c, 30a, 30b, 40, 50),
- un dispositif de commande (60 ; 100) de cet équipement domotique, comprenant un écran tactile de visualisation et de commande (101) sur lequel une partie de l'écran est affectée à l'affichage d'une première représentation graphique schématique, associée à cet équipement, le dispositif de commande étant distinct du moyen de commande spécifique,
**caractérisé en ce qu'**il comprend :
- une étape de sélection par l'utilisateur d'un premier équipement domotique et d'un deuxième équipement domotique participant à un scénario,
- une étape de premier réglage d'au moins une valeur d'un paramètre du premier équipement domotique participant à la définition du scénario, le premier réglage étant celui souhaité lors d'une exécution ultérieure du scénario, cette étape de premier réglage étant mise en œuvre par action sur le moyen de commande spécifique de façon à provoquer une phase de modification de l'état du dispositif domotique, et
- une étape de deuxième réglage d'au moins une valeur d'un paramètre du deuxième équipement domotique participant à la définition du scénario, le deuxième réglage étant celui souhaité lors d'une exécution ultérieure du scénario, cette étape de deuxième réglage étant mise en œuvre par action de l'utilisateur sur l'écran tactile du dispositif de commande de façon à provoquer une phase de modification de l'apparence de la première représentation graphique schématique de l'équipement domotique, la première représentation graphique schématique étant représentative de la valeur du paramètre, et
- suite aux étapes de réglage, une étape d'enregistrement des valeurs de paramètres dans une mémoire de scénario pour être transmises comme consignes lors d'une exécution ultérieure du scénario, et
- une phase de scrutation incluant une étape de requête (902, 903) adressée par le dispositif de commande au premier et/ou au deuxième équipement pour que le premier et/ou le deuxième équipement réponde par une information sur son état et une étape (901) de détection d'émission d'ordre de commande ou d'information d'exécution d'ordre de commande, l'étape de requête étant anticipée (903) quand le résultat de l'étape de détection est positif, la phase de scrutation permettant de mettre à jour la première représentation graphique schématique.

2. Procédé de fonctionnement selon la revendication 1, **caractérisé en ce que** la phase de modification de l'apparence de la représentation graphique schématique de l'équipement domotique comprend :
- un affichage sur l'écran de la première représentation graphique schématique de l'équipement comprenant un bouton de réglage,
- une action sur le bouton de réglage modifiant la première représentation graphique schématique représentative de la valeur du paramètre.

3. Procédé de fonctionnement selon la revendication 1 ou 2, **caractérisé en ce que** la phase de modification de l'apparence de la représentation graphique schématique de l'équipement domotique comprend :
- une sélection d'une deuxième représentation graphique schématique, comme une icône d'équipement, la sélection de la deuxième représentation graphique schématique provoquant l'affichage sur l'écran de la première représentation graphique schématique de l'équipement.

4. Procédé de fonctionnement selon l'une des revendications précédentes, **caractérisé en ce qu'**une validation de la modification de l'apparence de la première représentation graphique schématique de l'équipement domotique entraîne la modification instantanée de l'état de l'équipement domotique, conformément à l'apparence modifiée.

5. Procédé de fonctionnement selon l'une des revendications précédentes, **caractérisé en ce qu'**une validation de la modification de l'apparence de la première représentation graphique schématique de l'équipement domotique n'entraîne aucune modification instantanée de l'état de l'équipement domotique.

6. Système domotique comprenant :
- au moins un équipement domotique (1a, 2a, 2b, 2c, 3a, 3b, 4a, 5a) d'un bâtiment, l'équipement domotique étant muni d'un moyen de commande spécifique d'équipement (10, 20a, 20b, 20c, 30a, 30b, 40, 50),
- un dispositif de commande (60 ; 100) de cet équipement domotique, comprenant un écran tactile de visualisation et de commande (101) sur lequel une partie de l'écran est affectée à l'affichage d'une première représentation graphique schématique, symbolisant cet équipement, le dispositif de commande étant distinct du moyen de commande spécifique, **caractérisé en ce qu'**il comprend des moyens matériels et/ou logiciels de mise en oeuvre du procédé de fonctionnement selon l'une des revendications 1 à 5.

7. Système domotique selon la revendication 6, **caractérisé en ce que** les moyens matériels comprennent un moyen de sélection d'une deuxième représentation graphique schématique, comme une icône d'équipement, apte à provoquer l'affichage sur l'écran de la première représentation du produit mobile entraîné par l'équipement domotique et un moyen de transformation de la première représentation graphique schématique.

8. Système domotique selon la revendication 6 ou 7, **caractérisé en ce que** le dispositif de commande et/ou l'équipement domotique et/ou le moyen de commande comprend des moyens de communication bidirectionnelle.

## Patentansprüche

1. Verfahren zum Betrieb eines Gebäudeautomationssystems, welches umfasst:
- wenigstens eine Gebäudeautomationseinrichtung (1a, 2a, 2b, 2c, 3a, 3b, 4a, 5a) eines Gebäudes, wobei die Gebäudeautomationseinrichtung einem spezifischen Steuerungsmittel (10, 20a, 20b, 20c, 30a, 30b, 40, 50) der Einrichtung zugeordnet ist,
- eine Steuerungsvorrichtung (60; 100) dieser Gebäudeautomationseinrichtung, welche einen Berührungsbildschirm zur Visualisierung und Steuerung (101) umfasst, auf welchem ein Teil des Bildschirms der Anzeige einer ersten schematischen graphischen Darstellung zugewiesen ist, die dieser Einrichtung zugeordnet ist, wobei die Steuerungsvorrichtung von dem spezifischen Steuerungsmittel verschieden ist,
**dadurch gekennzeichnet, dass** es umfasst:
- einen Schritt der Auswahl einer ersten Gebäudeautomationseinrichtung und einer zweiten Gebäudeautomationseinrichtung, die an einem Szenario beteiligt sind, durch den Benutzer,
- einen Schritt einer ersten Einstellung wenigstens eines Wertes eines Parameters der ersten Gebäudeautomationseinrichtung, der an der Definition des Szenarios beteiligt ist, wobei die erste Einstellung diejenige ist, die bei einer späteren Ausführung des Szenarios gewünscht wird, wobei dieser Schritt einer ersten Einstellung durch eine Einwirkung auf das spezifische Steuerungsmittel durchgeführt wird, um eine Phase der Änderung des Zustands der Gebäudeautomationsvorrichtung hervorzurufen, und
- einen Schritt einer zweiten Einstellung wenigstens eines Wertes eines Parameters der zweiten Gebäudeautomationseinrichtung, der an der Definition des Szenarios beteiligt ist, wobei die zweite Einstellung diejenige ist, die bei einer späteren Ausführung des Szenarios gewünscht wird, wobei dieser Schritt einer zweiten Einstellung durch eine Einwirkung des Benutzers auf den Berührungsbildschirm der Steuerungsvorrichtung durchgeführt wird, um eine Phase der Änderung des Aussehens der ersten schematischen graphischen Darstellung der Gebäudeautomationseinrichtung hervorzurufen, wobei die erste schematische graphische Darstellung für den Wert des Parameters repräsentativ ist, und
- im Anschluss an die Schritte der Einstellung, einen Schritt der Speicherung der Werte von Parametern in einem Szenariospeicher, um bei einer späteren Ausführung des Szenarios als Sollwerte übertragen zu werden, und
- eine Phase der Abfrage, die einen Schritt einer Anforderung (902, 903) beinhaltet, die von der Steuerungsvorrichtung an die erste und/oder an die zweite Einrichtung gerichtet wird, damit die erste und/oder die zweite Einrichtung mit einer Information über ihren Zustand antwortet, und einen Schritt (901) der Erkennung des Sendens eines Steuerbefehls oder von Informationen über die Ausführung eines Steuerbefehls, wobei der Schritt der Anforderung vorgezogen wird (903), wenn das Ergebnis des Schrittes der Erkennung positiv ist, wobei die Phase der Abfrage ermöglicht, die erste schematische graphische Darstellung zu aktualisieren.

2. Verfahren zum Betrieb nach Anspruch 1, **dadurch gekennzeichnet, dass** die Phase der Änderung des Aussehens der schematischen graphischen Darstellung der Gebäudeautomationseinrichtung umfasst:
- eine Anzeige der ersten schematischen graphischen Darstellung der Einrichtung auf dem Bildschirm, welche einen Einstellknopf umfasst,
- eine Einwirkung auf den Einstellknopf, welche die erste schematische graphische Darstellung, die für den Wert des Parameters repräsentativ ist, verändert.

3. Verfahren zum Betrieb nach Anspruch 1 oder 2, **dadurch gekennzeichnet, dass** die Phase der Änderung des Aussehens der schematischen graphischen Darstellung der Gebäudeautomationseinrichtung umfasst:
- eine Auswahl einer zweiten schematischen graphischen Darstellung, wie eines Einrichtungs-Icons, wobei die Auswahl der zweiten schematischen graphischen Darstellung die Anzeige der ersten schematischen graphischen Darstellung auf dem Bildschirm hervorruft.

4. Verfahren zum Betrieb nach einem der vorhergehenden Ansprüche, **dadurch gekennzeichnet, dass** eine Validierung der Änderung des Aussehens der ersten schematischen graphischen Darstellung der Gebäudeautomationseinrichtung die sofortige Änderung des Zustands der Gebäudeautomationseinrichtung gemäß dem geänderten Aussehen zur Folge hat.

5. Verfahren zum Betrieb nach einem der vorhergehenden Ansprüche, **dadurch gekennzeichnet, dass** eine Validierung der Änderung des Aussehens der ersten schematischen graphischen Darstellung der Gebäudeautomationseinrichtung keine sofortige Änderung des Zustands der Gebäudeautomationseinrichtung zur Folge hat.

6. Gebäudeautomationssystem, welches umfasst:
- wenigstens eine Gebäudeautomationseinrichtung (1a, 2a, 2b, 2c, 3a, 3b, 4a, 5a) eines Gebäudes, wobei die Gebäudeautomationseinrichtung mit einem spezifischen Steuerungsmittel (10, 20a, 20b, 20c, 30a, 30b, 40, 50) der Einrichtung versehen ist,
- eine Steuerungsvorrichtung (60; 100) dieser Gebäudeautomationseinrichtung, welche einen Berührungsbildschirm zur Visualisierung und Steuerung (101) umfasst, auf welchem ein Teil des Bildschirms der Anzeige einer ersten schematischen graphischen Darstellung zugewiesen ist, welche diese Einrichtung symbolisiert, wobei die Steuerungsvorrichtung von dem spezifischen Steuerungsmittel verschieden ist,
**dadurch gekennzeichnet, dass** es Hardware- und/oder Softwaremittel zur Durchführung des Verfahrens zum Betrieb nach einem der Ansprüche 1 bis 5 umfasst.

7. Gebäudeautomationssystem nach Anspruch 6, **dadurch gekennzeichnet, dass** die Hardwaremittel ein Mittel zur Auswahl einer zweiten schematischen graphischen Darstellung, wie eines Einrichtungs-Icons, das geeignet ist, die Anzeige der ersten Darstellung des von der Gebäudeautomationseinrichtung angetriebenen beweglichen Produkts auf dem Bildschirm hervorzurufen, und ein Mittel zur Umwandlung der ersten schematischen graphischen Darstellung umfassen.

8. Gebäudeautomationssystem nach Anspruch 6 oder 7, **dadurch gekennzeichnet, dass** die Steuerungsvorrichtung und/oder die Gebäudeautomationseinrichtung und/oder das Steuerungsmittel Mittel zur bidirektionalen Kommunikation umfassen.

## Claims

1. Method of operating a home automation system comprising :
- at least one home automation equipment item (1a, 2a, 2b, 2c, 3a, 3b, 4a, 5a) of a building, the home automation equipment item being associated with a specific equipment control means (10, 20a, 20b, 20c, 30a, 30b, 40, 50),
- a device (60; 100) for controlling this home automation equipment item, comprising a touch display and control screen (101) on which a portion of the screen is assigned to the display of a first schematic graphic representation, associated with this equipment item, the control device being separate from the specific control means,
**characterized in that** it comprises :
- a step for a selection by the user of a first home automation equipment and a second home automation equipment involved in a scenario,
- a step for a first setting of at least one value of a parameter of the first home automation equipment item involved in the definition of the scenario, the first setting being the desired setting on a subsequent execution of the scenario, this step of a first setting being implemented by action on the specific control means so as to cause a phase for modification of the state of the home automation equipment item, and
- a step for a second setting of at least one value of a parameter of the second home automation equipment item involved in the definition of the scenario, the second setting being the desired setting on a subsequent execution of the scenario, this step of a second setting being implemented by action of the user on the touch screen of the control device so as to cause a phase for modification of the appearance of the first schematic graphic representation of the home automation equipment item, the first graphic representation being representative of the value of the parameter, and
- following the setting steps, a step for saving the parameters values in a scenario memory to be transmitted as setpoints on a subsequent execution of the scenario, and,
- a scanning phase including a request step (902, 903) sent by the control device to the first and/or second equipment item for the first and/or second equipment item to reply with information on its state and a step (901) for the detection of the transmission of control commands or control command execution information, the request step being early (903) when the result of the detection step is positive, the scanning phase making it possible to update the first schematic graphic representation.

2. Operating method according to Claim 1, **characterized in that** the phase for modification of the appearance of the schematic graphic representation of the home automation equipment item comprises:
- a display on the screen of the first schematic graphic representation of the equipment item comprising a setting button,
- an action on the setting button modifying the first schematic graphic representation representative of the value of the parameter.

3. Operating method according to Claim 1 or 2, **characterized in that** the phase for modification of the appearance of the schematic graphic representation of the home automation equipment item comprises:
- a selection of a second schematic graphic representation, such as an equipment icon, the selection of the second schematic graphic representation causing the display on the screen of the first schematic graphic representation of the equipment item.

4. Operating method according to one of the preceding claims, **characterized in that** a validation of the modification of the appearance of the first schematic graphic representation of the home automation equipment item results in the instantaneous modification of the state of the home automation equipment item, in accordance with the modified appearance.

5. Operating method according to one of the preceding claims, **characterized in that** a validation of the modification of the appearance of the first schematic graphic representation of the home automation equipment item does not result in any instantaneous modification of the state of the home automation equipment item.

6. Home automation system comprising:
- at least one home automation equipment item (1a, 2a, 2b, 2c, 3a, 3b, 4a, 5a) of a building, the home automation equipment being provided with a specific equipment control means (10, 20a, 20b, 20c, 30a, 30b, 40, 50),
- a device (60; 100) for controlling this home automation equipment item, comprising a touch display and control screen (101) on which a portion of the screen is assigned to the display of a first schematic graphic representation, symbolizing this equipment item, the control device being separate from the specific control means,
**characterized in that** it comprises hardware and/or software means for implementing the operating method according to one of Claims 1 to 5.

7. Home automation system according to Claim 6, **characterized in that** the hardware means comprise a means of selecting a second schematic graphic representation, such as an equipment icon, able to cause the display on the screen of the first representation of the moving product driven by the home automation equipment item and a means of transforming the first schematic graphic representation.

8. Home automation system according to Claim 6 or 7, **characterized in that** the control device and/or the home automation equipment item and/or the control means comprises bidirectional communication means.
